# EUROPÄISCHE PATENTANMELDUNG

(11) **EP 1 279 341 A1**
(43) Veröffentlichungstag der Anmeldung: **29.01.2003**
(21) Anmeldenummer: 01117892.8
(22) Anmeldetag: 23.07.2001
(51) Int. Cl.: A23L 1/23, A23L 1/39

(54) **Verfahren zur Herstellung von Würzmitteln aus Hanfsamen**

(71) Anmelder: Metz, Michael, Dr., 70180 Stuttgart (DE)
(72) Erfinder: Metz, Michael, Dr., 70180 Stuttgart (DE)
(74) Vertreter: Behrendt, Arne, Dipl.-Ing.

(57) **Zusammenfassung**

Die Erfindung betrifft ein Verfahren zur Herstellung von Würzmitteln aus Pflanzensamen, bei dem entölte Hanfsamen in einem ersten Schritt gedämpft werden, die gedämpfte Masse mit einem Pilz der Gattung Aspergillus beimpft und bei einer Temperatur von 20°C bis 40°C 2d bis 10d stehen gelassen wird, die fermentierte Masse in einem zweiten Schritt mit Salzlösung gemischt wird und unter Zusatz eines salztoleraten Milchsäurebildners und einer Hefe der Gattung Zygosaccharomyces wenigstens ein und höchtens fünf Monate bei 15°C bis 25°C reifen gelassen wird, wonach die flüssige Phase gewonnen wird, sowie daraus erhaltene Würzmittel.

## Beschreibung

Die Erfindung betrifft ein Verfahren zur Herstellung von Würzmitteln aus Pflanzensamen, insbesondere einer Würzsoße aus fermentiertem Hanfpresskuchen.

Würzsoßen und Verfahren zu ihrer Herstellung durch Fermentation pflanzlicher Samen sind seit langem bekannt und geschätzt. So wird seit Jahrtausenden eine Würzsoße aus Sojabohnen als Proteinquelle mit Hilfe von Aspergillus sojae und Getreide als Kohlenstoffquelle für die Pilzanzucht hergestellt. Als Kohlenstoffquellen wird insbesondere Weizen erwähnt, aber auch Gerste, Hafer und Reis. Je nach Soßentyp kann die Kombination Soja/Getreide in verschiedener Form vorbehandelt werden um verschiedenen Geschmacksrichtungen gerecht zu werden.

Bei Sojasoßen können insgesamt fünf Geschmacksrichtungen unterschieden werden, die sich vor allem aus dem Mischungsverhältnis von Soja und Getreide und aus den angewandten Herstellungsbedingungen ergeben. Allen Typen gemeinsam ist aber ein gewisser bitterer Geschmack und ein außerordentlich zeitaufwendiges Herstellungsverfahren.

Der Geschmack einer Sojasoße wird unter anderem von dem Gehalt von freien Aminosäuren in der Lösung bestimmt. Bei der Herstellung wird unter den Fermentierungsbedingungen das im Rohmaterial vorhandene Protein herausgelöst und zumindest teilweise hydrolisiert.

Die Geschmacksintensität wird vom Glutaminsäuregehalt beeinflußt, der Grad der Bitternis vor allem vom Gehalt an freiem Phenylalanin, Tryptophan und Arginin. Der Grad der Bitternis kann nur in Grenzen gesteuert werden, da eine ausreichende Hydrolyse des Eiweißgehaltes Voraussetzung für eine qualitativ hochwertige Sojasoße ist und bei der Hydrolyse zwangsläufig bitter schmekkende Aminosäuren freigesetzt werden. Im Ergebnis wird der Geschmack aller Typen von Sojasoße auch von den Bitterstoffen mitgeprägt.

Ein weiterer Nachteil von Würzsoßen auf Sojabasis ist, daß diese nicht ohne nachteilige Farb- und Geschmacksveränderung erhitzt werden können. Sojasoßen entwickeln beim Erhitzen auf Koch- oder Brattemperatur einen typischen "Brandgeschmack", der vom Verbraucher in aller Regel als unangenehm empfunden wird. Weiterhin entsteht eine optisch wenig ansprechende schwarze Verfärbung. Die Verwendung von Sojasoßen in Fertiggerichten ist deshalb problematisch.

Schließlich ist das Herstellungsverfahren von Sojasoßen zeit- und materialaufwendig. Die zusätzliche Verwendung einer Kohlenstoffquelle in Form von aufbereiteten Getreide und ggf. die Vorkultivierung des Pilzes der Gattung Aspergillus erfordern zusätzliche Verfahrensschritte.

Der Kohlenhydratgehalt von Sojabohnen selbst ist aber verhältnismäßig gering, so daß die zusätzliche Kohlenstoffquelle für die gute Ausbeute und eine kurze Fermentationsdauer erforderlich ist. Verfahren ohne zusätzliche Kohlenstoffquelle (Tamari-Herstellung) sind erheblich zeit- und kostenaufwendiger.

Aus der Patentschrift DE 196 32 452 C1 ist ein Verfahren zur Herstellung einer Würzsoße auf Basis von Süßlupinen bekannt. Süßlupinen zeigen von der Aufschlüsselung ihrer Bestandteile her eine ähnliche Zusammensetzung wie Sojabohnen, auch bezüglich der Aminosäurenzusammensetzung, insbesondere wenn man sie mit der Zusammensetzung von entfettetem Sojamehl vergleicht. Entsprechend gestaltet sich daß Aufschluß- und Fermentierungsverfahren sehr ähnlich zu dem der Herstellung von Sojasoße aus entfettetem Sojaschrot und Weizen. Auch die verwendeten Mikroorganismen, Aspergillus oryzae und Zygosaccharomyces rouxii sind die gleichen wie bei der Herstellung von Sojasoßen. Nach Aussage der Patentschrift unterscheidet sich die Soße geschmacklich von einer herkömmlichen Sojasoße insbesondere auch durch eine Verminderung des Bittergeschmacks. Desweiteren ist der für seine geschmacksverstärkende Wirkung bekannte Gehalt an Glutamin- und Asparaginsäure erhöht.

Aber auch die aus DE 196 32 452 C1 bekannte Soße bedarf der langwierigen und rohstoffaufwendigen Herstellung unter Zusatz von Getreide als weiterere Kohlenstoffquelle und hat den Nachteil, beim Erhitzen den unerwünschten Brandgeschmack anzunehmen.

Ziel der Erfindung ist die Bereitstellung eines Würzmittels, das bei ähnlicher Würzintensität die oben aufgezeichneten Nachteile herkömmlicher Sojasoßen und der Soße auf Basis von Süßlupinen nicht aufweist und insbesondere eine für den Verbraucher akzeptable Geschmacksrichtung aufweisen.

Es wurde überraschend gefunden, daß eine solche Soße auf Basis von entölten Hanfsamen hergestellt werden kann.

Entsprechend betrifft die Erfindung ein Verfahren zur Herstellung von Würzmitteln aus Pflanzensamen, bei dem in einem ersten Schritt Hanfsamen gedämpft werden, die gedämpfte Masse mit einem zur Fermentierung geeigneten Pilz der Gattung Aspergillus beimpft und bei einer Temperatur von 20°C bis 40°C 2d bis 10d reifen gelassen wird, in einem zweiten Schritt die fermentierte Masse mit Salzlösung vermischt wird und unter Zusatz eines salztoleranten Milchsäurebildners und einer salztoleranten Hefe der Gattung Zygosaccharomyces wenigstens ein und höchstens fünf Monate bei 15°C bis 25°C unter Aufmischung reifen gelassen wird, wonach die flüssige Phase gewonnen wird.

Als Milchsäurebildner kommen salztolerante Spezies der Gattungen Pediococcus und Lactobacillus in Frage.

Die im erfindungsgemäßen Verfahren eingesetzten Mikroorganismen der Gattungen Aspergillus, Lactobacillus, Pediococcus und Zygosaccharomyces, insbesondere die Species Aspergillus sojae und Aspergillus oryzae, Pediococcus halophilus und Zygosaccharomyces rouxii sind auf dem Markt frei erhältlich, beispielsweise von der deutschen Sammlung für Mikroorganismen und Zellkulturen DSMZ in Braunschweig. Es handelt sich dabei um zur Fermentierung geeignete und lebensmittelrechtlich und gesundheitlich undbedenkliche Spezies und Stämme.

Das erfindungsgemäße Verfahren beruht auf der Verwendung von vorzugsweise entölten Hanfsamen, der vorstehend genannten Mikroorganismen, sowie einer relativ hoch konzentrierten Salzlösung.

Hanfsamen enthalten durchschnittlich 28% bis 35% Fett, 30% bis 35 Gew.% Kohlenhydrate, 20% bis 24% Protein und ein, verglichen mit anderen pflanzlichen Lebensmitteln, recht hohen Gehalt an B-Vitaminen, Vitamin E, Calcium, Magnesium, Kalium und Eisen. Der Kohlenhydratgehalt macht somit das 1,5 fache des Proteingehaltes aus.

Im Gegensatz dazu enthalten Sojasamen bis 40 Gew.% Eiweiß, bis 20 Gew.% Fette sowie bis zu 20 Gew.% Kohlenhydrate. Das Verhältnis Protein/Kohlenhydrate beträgt somit bei Sojasamen etwa 0,5. Der vergleichsweise geringe Kohlenhydratgehalt bei Sojasamen ist dafür verantwortlich, daß bei der Herstellung von Sojasoße die für die Pilzanzucht nötige Kohlenhydratquelle zumeist in Form von zusätzlichem Getreide bereit gestellt werden muß. Der im Vergleich zu Soja dreifach erhöhte Kohlenhydratgehalt von Hanfsamen macht die Zugabe von Getreidemehl überflüssig. Nichts-destoweniger werden trotzdem mit der Hanfsoße und Würze ein für den Konsumenten befriedigender Geschmack und eine gute Würzwirkung erzielt. Grundsäztlich ist es aber möglich, im ersten Schritt bis zu 100 Gew.% bezogen auf den Hanf, Getreide in Form von Körnern, Schrot oder Mehl, insbesondere Weizen oder Mais, zuzusetzen.

Bei den zum Einsatz kommenden Hanfsamen handelt es sich um vorzugsweise entölte Hanfsamen, insbesondere um Schrot aus entölten und THC-armen Hanfsorten. Entölter Hanfsamen bleibt in größeren Mengen bei der Gewinnung des für industrielle Fertigungsverfahren geschätzten Hanföls zurück. Besonders bevorzugt ist die Verwendung von entöltem Hanfschrot. Der zum Einsatz kommende Hanf wird zunächst bei Temperaturen von, 100°C oder mehr gedämpft, bevor er beimpft wird.

Es können auch nicht entölte, vorzugsweise gequetschte Hanfsamen verwandt werden; in diesem Fall scheidet sich das Hanföl zumindest teilweise während der Fermentation ab.

Die in der ersten Stufe des erfindungsgemäßen Verfahren zum Einsatz kommenden Mikroorganismen sind insbesondere Aspergillus sojae und/oder Aspergillus oryzae, wie sie in der herkömmlichen Herstellung von Sojasoße zum Einsatz kommen. Im zweiten Verfahrensschritt wird dann auf eine Mischung aus Milchsäurebakterien, vorzugsweise der Gattung Pediococcus, insbesondere Pediococcus halophilus, und einer Hefe der Gattung Zygosaccharomyces insbesondere Zygosaccharomyces rouxii, letzterer aus der Sojafermentierung bekannt, zurückgegriffen. Alle Mikroorganismen sind kommerziell erhältlich.

Die Verwendung von Milchsäurebakterien der Gattung Pediococcus trägt zum einen zum Aufschluß der Masse und damit zur Geschmacksbildung bei. Die gebildete Milchsäure senkt den pH-Wert in der Maische ab und liefert dadurch eine zusätzliche, etwas säuerliche Geschmacksnuance. Zum anderen sind aber die Pediokokken geeignet, bakterielle Fremdkeime zu unterdrücken und damit die Anfälligkeit des Verfahrens gegen Infektion zu vermindern. Die gebildete Milchsäure stabilisiert und konserviert das Produkt.

Die erste Verfahrensstufe wird vorzugsweise bei einer Temperatur bei von 25°C bis 35°C über einen Zeitraum von etwa drei Tagen durchgeführt. Je nach Geschmacksrichtung kann diese Zeit verkürzt oder verlängert werden, wobei eine Verlängerung zu einem verstärkten Aufschluß der Proteine und damit zu einer Geschmacksintensivierung führt.

Im zweiten Verfahrensschritt beträgt die optimale Reifungstemperatur etwa 20°C und die Reifungsdauer etwa zwei Monate. Auch hier sind Abweichungen zur Erzielung besonderer Geschmacknuancen möglich.

Die im zweiten Verfahrensschritt eingesetzten Mikroorganismen müssen sich durch eine erhöhte Salztoleranz ausweisen, was insbesondere bei Pediococcus halophilus und Zygosaccaromyces rouxii gegeben ist.

Im zweiten Verfahrensschritt wird die fermentierte Hanfmasse mit einer hoch konzentrierten Salzlösung vermischt. Die Salzlösung enthält insbesondere 15 Gew.% bis 25 Gew.% Kochsalz. Die Maische des zweiten Verfahrensschritts enthält zweckmäßigerweise 7,5 Gew.% bis 15 Gew.% Kochsalz. Nach Beimpfen mit den Bakterien- und Pilzkulturen wird die Mischung unter regelmäßigem Aufmischen bzw. Umrühren bei 15°C bis 25°C, vorzugsweise etwa 20°C stehen und reifen gelassen. Nach Abschluß der Reifung wird die flüssige Phase von den Feststoffen getrennt, filtriert, pasteurisiert und falls gewünscht, auf Flaschen gezogen. Man erhält eine trubfreie, bernsteinfarbene bis dunkelbraune Soße.

Die festen Bestandteile des zweiten Verfahrensschrittes werden nach dem Abtrennen, vorzugsweise Abpressen der flüssigen Phase getrocknet und können, gegebenenfalls nach Sterilisierung oder Pasteurisierung und Vermahlung, als Würzpulver eingesetzt werden.

Die Erfindung betrifft ferner eine nach dem vorstehenden Verfahren erhältliche Hanf-Würzsoße, sowie ein Hanf-Würzpulver.

### Beispiel:

500 g entölter Hanfschrot werden 10 Min. bei 100°C im Kessel gedämpft und anschließend mit 0,1 g einer getrockneten Sporenreinkultur von Aspergillus oryzae (alternativ: A.sojae) beimpft. Das beimpfte Material wird bei 30°C und hoher Luftfeuchtigkeit fermentiert. Es wird ein mit Pilzmycel durchwachsener Kuchen erhalten.

Im Anschluß daran wird der Kuchen für den zweiten Verfahrensschritt mit 200 g Kochsalz und 1000 g Wasser versetzt und gut durchgemischt. Die Mischung wird mit je 10 ml Impflösung (1%) Pedicoccus halophilus und Zygosaccharomyces rouxii beimpft und unter regelmäßigem Aufmischen zur Verhinderung der Sedimentation zwei Monate bei Zimmertemperatur fermentieren und reifen gelassen. Die ausgereifte Mischung wird dann abgepreßt, kurzzeit erhitzt und erneut filtriert. Das Filtrat stellt die Würzsoße dar.

Der feuchte Preßkuchen wird unter Erwärmen getrocknet, vermahlen und ist als Würzpulver einsetzbar.

Der Geschmack der so erhaltenen Würzmittel wird von Testpersonen als salzig, schwach säuerlich und wenig bitter empfunden. Der Geschmack ist aromatisch, würzig, ohne scharf oder unangenehm zu sein, und die Soße ist von hoher Würzkraft. Die Würzmittel können bei der Zubereitung der Speisen während des Koch- bzw. Bratvorganges eingesetzt werden, ohne daß eine nachteilige Farboder Geschmacksveränderung stattfindet. Das Würzpulver ist insbesondere zum Verfeinern von Suppen und Soßen geeignet.

## Patentansprüche

1. Verfahren zur Herstellung von Würzmitteln aus Pflanzensamen, **dadurch gekennzeichnet, daß** Hanfsamen in einem ersten Schritt gedämpft werden, die gedämpfte Masse mit einem zur Fermentierung geeigneten Pilz der Gattung Aspergillus beimpft und bei einer Temperatur von 20°C bis 40°C 2d bis 10d stehen gelassen wird, die fermentierte Masse in einem zweiten Schritt mit einer Salzlösung vermischt wird und unter Zusatz eines salztoleranten Milchsäurebildners und eines salztoleranten Pilzes der Gattung Zygosaccharomyces wenigstens ein und höchstens fünf Monate bei 15°C bis 25°C reifen gelassen wird, wonach die flüssige Phase gewonnen wird.

2. Verfahren nach Anspruch 1, **dadurch gekennzeichnet, daß** die beimpfte Masse bei einer Temperatur von 25°C bis 35°C etwa 3d stehen gelassen wird.

3. Verfahren nach Anspruch 1 oder 2, **dadurch gekennzeichnet, daß** im zweiten Schritt die fermentierte Masse zwei bis drei Monate bei 20°C reifen gelassen wird.

4. Verfahren nach einem der Ansprüche 1 bis 3, **dadurch gekennzeichnet, daß** im ersten Schritt Aspergillus sojae und/oder Aspergillus oryzae verwandt werden.

5. Verfahren nach einem der vorstehenden Ansprüche, **dadurch gekennzeichnet, daß** der Milchsäurebildner Pediococcus halophilus ist.

6. Verfahren nach einem der vorstehenden Ansprüche, daß im zweiten Verfahrensschritt die fermentierte Masse mit einem Pilz der Spezies Zygosaccharomyces rouxii versetzt wird.

7. Verfahren nach einem der vorstehenden Ansprüche, **dadurch gekennzeichnet, daß** entölter Hanfsamen verwandt wird.

8. Verfahren nach einem der vorstehenden Ansprüche, **dadurch gekennzeichnet, daß** der Hanfsamen aus entöltem Schrot von THC-armem Hanf besteht.

9. Verfahren nach einem der vorstehenden Ansprüche, **dadurch gekennzeichnet, daß** im zweiten Schritt die fermentierte Masse mit 100 bis 200 Gew.% Salzlösung mit einem Salzgehalt von 15% bis 25% versetzt wird.

10. Verfahren nach Anspruch 9, **dadurch gekennzeichnet, daß** der Salzgehalt im zweiten Verfahrensschritt 7,5 Gew.% bis 15 Gew.% beträgt.

11. Verfahren nach einem der vorstehenden Ansprüche, **dadurch gekennzeichnet, daß** bis zu 100 Gew.%, bezogen auf den eingesetzten Hanf, Getreide zugesetzt wird.

12. Verfahren nach einem der vorstehenden Ansprüche, **dadurch gekennzeichnet, daß** das gereifte Produkt des zweiten Schritts abgepreßt, filtriert und pasteurisiert wird.

13. Verfahren nach einem der vorstehenden Ansprüche, **dadurch gekennzeichnet, daß** der feste Rückstand des zweiten Verfahrenschritts nach Abtrennung der flüssigen Phase getrocknet und vermahlen wird.

14. Hanfsoße, erhältlich nach dem Verfahren von Anspruch 12.

15. Würzpulver, erhältlich nach dem Verfahren von Anspruch 13.
